# EUROPÄISCHE PATENTSCHRIFT

(11) **EP 2 632 781 B1**
(45) Veröffentlichungstag und Bekanntmachung des Hinweises auf die Patenterteilung: **01.03.2017**
(21) Anmeldenummer: 11751898.5
(22) Anmeldetag: 01.09.2011
(51) Int. Cl.: B60T 8/48, B60T 8/36, B60T 8/26, B60T 8/24

(54) **BREMSSYSTEM FÜR EIN FAHRZEUG**
BRAKING SYSTEM FOR A VEHICLE
SYSTÈME DE FREINAGE POUR UN VÉHICULE

(30) Priorität: 27.10.2010 DE 102010042990
(43) Veröffentlichungstag der Anmeldung: 04.09.2013
(73) Patentinhaber: Robert Bosch GmbH, 70442 Stuttgart (DE)
(72) Erfinder: STRENGERT, Stefan, Stuttgart 70469 (DE); KUNZ, Michael, 71711 Steinheim An Der Murr (DE)
(86) Internationale Anmeldenummer: PCT/EP2011/065119
(87) Internationale Veröffentlichungsnummer: WO 2012/055617

(56) Entgegenhaltungen:
- WO-A1-98/31576
- WO-A1-03/053755
- WO-A1-2008/155045
- WO-A1-2010/102844
- DE-A1- 3 912 234
- DE-A1- 4 322 182
- DE-A1- 19 604 134
- DE-A1- 19 963 760
- DE-A1-102009 007 494
- JP-A- 11 285 102
- JP-A- 2002 255 018
- US-A- 3 749 125

## Beschreibung

Die Erfindung betrifft ein Bremssystem für ein Fahrzeug.

### Stand der Technik

Elektro- und Hybridfahrzeuge weisen ein für ein rekuperatives Bremsen ausgelegtes Bremssystem mit einem bei dem rekuperativen Bremsen generatorisch betriebenen Elektromotor auf. Die bei dem rekuperativen Bremsen gewonnene elektrische Energie wird nach einem Zwischenspeichern vorzugsweise für ein Beschleunigen des Fahrzeugs verwendet. Auf diese Weise sind eine bei einem häufigen Bremsen während einer Fahrt auftretende Verlustleistung, ein Energieverbrauch und eine Schadstoffemission des Elektro- oder Hybridfahrzeugs reduzierbar.

Allerdings setzt das generatorische Betreiben des Elektromotors, beispielsweise des elektrischen Antriebsmotors, in der Regel eine bestimmte Mindestgeschwindigkeit des Fahrzeugs voraus. Ein rekuperatives Bremssystem ist somit häufig nicht in der Lage, so lange ein generatorisches Bremsmoment auf die Räder des Fahrzeugs auszuüben, bis sich das zuvor fahrende Fahrzeug im Stillstand befindet. Ein Hybridfahrzeug weist deshalb zusätzlich zu dem rekuperativ betriebenen Elektromotor oft noch ein hydraulisches Bremssystem auf, mittels welchem zumindest in einem niedrigen Geschwindigkeitsbereich die wegfallende Bremswirkung der rekuperativen Bremse kompensierbar ist. In diesem Fall kann auch bei einem vollen elektrischen Energiespeicher, wenn die rekuperative Bremse meistens kein Bremsmoment auf die Räder ausübt, das gesamte Bremsmoment über das hydraulische Bremssystem aufgebracht werden.
Andererseits ist es in manchen Situationen wünschenswert, eine möglichst niedrige hydraulische Bremskraft auf die Räder auszuüben, um einen hohen Rekuperationsgrad zu erzielen. Beispielsweise wird nach Schaltvorgängen häufig der abgekoppelte Generator als rekuperative Bremse aktiviert, um ein verlässliches Aufladen des Zwischenspeichers und eine hohe Energieeinsparung zu gewährleisten.

Im Allgemeinen bevorzugt ein Fahrer ein Gesamtbremsmoment seines Fahrzeugs, welches seiner Betätigung eines Bremsbetätigungselements, wie beispielsweise seiner Bremspedalbetätigung, unabhängig von einem Aktivieren oder einem Deaktivieren der rekuperativen Bremse entspricht. Manche Elektro- und Hybridfahrzeuge weisen deshalb eine Automatik auf, welche die Aufgabe des Verzögerungsreglers übernehmen und das Bremsmoment des hydraulischen Bremssystems an das aktuelle Bremsmoment der rekuperativen Bremse so anpassen soll, dass ein gewünschtes Gesamtbremsmoment eingehalten wird. Beispiele für eine derartige Automatik sind Brake-by-Wire-Bremssysteme, insbesondere EHB-Systeme. Aufgrund ihrer aufwändigen Elektronik, Mechanik und Hydraulik sind Brake-by-Wire-Bremssysteme jedoch relativ teuer.

Als Alternative zu den Brake-by-Wire-Bremssystemen beschreibt die DE 10 2008 002 345 A1 ein Bremssystem, welches einen von einem Hauptbremszylinder entkoppelten und an ein Bremsmediumreservoir angeschlossenen ersten Bremskreis umfasst. Diesem ersten Bremskreis ist eine Radachse zugeordnet, auf welche ein rekuperatives Bremsmoment eines generatorisch betriebenen Elektromotors ausübbar ist. Zwei weitere Bremskreise sind so an den Hauptbremszylinder gekoppelt, dass der Fahrer direkt in sie hineinbremsen und somit ein unmittelbares hydraulisches Bremsmoment auf die den zwei weiteren Bremskreisen zugeordneten Räder ausüben kann. Außerdem weist das Bremssystem einen festgelegten Pedalleerweg auf.

Die WO 98/31576 A1 offenbart ein erstes Bremssystem mit mehr als zwölf elektrisch ansteuerbaren Ventilen. Ein zweites Bremssystem der WO 98/31576 A1 hat zwölf elektrisch ansteuerbare Ventile und zwei Proportional-Druckventile. Die JP 11 285102 A beschreibt einen Bremsapparat für ein Elektrofahrzeug ohne genaue Angaben zur Anzahl der elektrisch ansteuerbaren Ventile des jeweiligen Bremsapparats zu machen. In der WO 2008/155045 A1 sind nur Bremssysteme mit mehr als zwölf elektrisch ansteuerbaren Ventilen beschrieben. Die Bremssysteme der JP 2002 255018 A haben alle zwei gleich ausgebildete Bremskreise. In der DE 43 22 182 A1 wird nicht auf die Anzahl der Ventile der offenbarten Bremssysteme eingegangen. In der DE 10 2009 007 494 A1 sind mehrere elektrisch gesteuerte Bremssysteme mit Simulatorfunktion beschrieben, wobei jedoch keines der Bremssysteme einen Bremskreis mit einem Umschaltventil und einem Hochdruckschaltventil aufweist. Bei dem in der WO 2010/102844 A1 beschriebenen Bremssystem ist ein Verschieben von Bremsflüssigkeit aus dem Hauptbremszylinder in ein Bremsflüssigkeitsreservoir über ein Trennventil nur möglich, wenn noch mindestens ein anderes Ventil des gleichen Bremskreises in seinen offenen Zustand gesteuert wird. Dies gilt auch für die hydraulische Bremsanlage für Kraftfahrzeuge der WO 03/053755 A1. Außerdem beschreibt die DE 196 04 134 A1 ein Verblenden eines Generator-Bremsmoments mittels mindestens eines Radauslassventils ihrer Bremsanlage.

### Offenbarung der Erfindung

Die Erfindung schafft ein Bremssystem für ein Fahrzeug mit den Merkmalen des Anspruchs 1.

### Vorteile der Erfindung

Die Erfindung ermöglicht ein Bremssystem, bei welchem der Leerweg des Bremsbetätigungselements (z. B. der Pedalleerweg) über das elektrische Ansteuern des ersten Ventils variabel vorgebbar ist. Sofern das erste Ventil in einen offenen Zustand gesteuert ist, hat der Leerweg des Bremsbetätigungselements zumindest die Länge des Grenzverstellwegs. Bei einem geschlossenen ersten Ventil kann der Fahrer hingegen bereits während eines Verstellens des Hauptbremszylinder-Schwimmkolbens um einen Verstellweg unter dem Grenzverstellweg, d. h. bei einer entsprechenden Mindestbetätigung des Bremsbetätigungselements, direkt in den Hauptbremszylinder hineinbremsen und auf diese Weise eine Druckerhöhung in dem Hauptbremszylinder bewirken.

Das erfindungsgemäße Bremssystem zeichnet sich somit durch einen veränderlichen und/oder abschaltbaren Leerweg des Bremsbetätigungselements aus. Auf diese Weise ist es möglich, bei der vorliegenden Erfindung die Vorteile eines Leerwegs des Bremsbetätigungselements zur Steigerung einer Effizienz bei einer Rekuperation zu nutzen und gleichzeitig die Nachteile eines langen Leerwegs des Bremsbetätigungselements in der hydraulischen Rückfallebene zu beseitigen.

Man kann dies auch so beschreiben, dass bei der vorliegenden Erfindung der Leerweg des Bremsbetätigungselements wahlweise einstellbar ist. Sofern das erste Ventil geöffnet ist, weist das an den Hauptbremszylinder angeordnete Bremsbetätigungselement einen Leerweg auf, dessen Länge zumindest dem Grenzverstellweg entspricht. Nach einem Schließen des ersten Ventils kann hingegen bereits eine Betätigung des Bremsbetätigungselements um einen Betätigungsweg innerhalb des wahlweise einstellbaren Leerwegs einen Druckaufbau in dem Hauptbremszylinder bewirken.

Die Bremsmedium-Speichervorrichtung ist derart ausgelegt, dass zumindest ein vorgegebenes Speichervolumen gegertdruckfrei, das heißt mit einer vernachlässigbaren Kraft, hineintransferierbar ist. Der Grenzverstellweg des Hauptbremszylinder-Schwimmkolbens entspricht einem Volumen des Bremsmediums, welches bei einem druckaufbaufreien Hineinverstellen des Hauptbremszylinder-Schwimmkolbens teilweise in den Hauptbremszylinder um den Grenzverstellweg aus dem Hauptbremszylinder verdrängt wird. Dieses verdrängte Volumen ist vorzugsweise gleich dem Speichervolumen der Bremsmedium-Speichervorrichtung ist. Man kann dies auch als eine Korrelation zwischen dem Grenzverstellweg und dem vorgegebenen Speichervolumen umschreiben.

Der Leerweg des an den Hauptbremszylinder angebundenen Bremsbetätigungselements ist somit wahlweise auf eine speziell für die aktuelle Fahrzeug- und/oder Umgebungssituation bevorzugte Länge einstellbar.

Außerdem umfasst das Bremssystem eine Steuervorrichtung, welche derart ausgebildet ist, dass mittels der Steuervorrichtung durch ein Steuern des ersten Ventils in seinen geöffneten Zustand und des zweiten Ventils in seinen geschlossenen Zustand das Bremssystem in einen ersten Modus steuerbar ist, in welchem eine Druckerhöhung in dem Hauptbremszylinder bei dem Verstellen des Hauptbremszylinder-Schwimmkolbens teilweise in den Hauptbremszylinder um den Verstellweg unter dem Grenzverstellweg unterbunden ist, und durch ein Steuern des ersten Ventils in seinen geschlossenen Zustand und des zweiten Ventils in seinen geöffneten Zustand das Bremssystem in einen zweiten Modus steuerbar ist, in welchem eine Druckerhöhung in dem Hauptbremszylinder mittels des Verstellens des Hauptbremszylinder-Schwimmkolbens teilweise in den Hauptbremszylinder um den Verstellweg unter dem Grenzverstellweg gewährleistet ist. Somit weist das in den ersten Modus gesteuerte Bremssystem einen minimalen Leerweg auf, welcher vorzugsweise gegen Null geht. Das in den zweiten Modus gesteuerte Bremssystem hat hingegen einen Leerweg, welcher zumindest dem Grenzverstellweg entspricht. Somit ist der Vorteil eines veränderlichen und/oder abschaltbaren Leerwegs des Bremsbetätigungselements auf einfache Weise realisierbar.

Die Bremsmedium-Speichervorrichtung ist ein Bremsmediumreservoir oder eine Niederdruck-Speicherkammer. Für die Bremsmedium-Speichervorrichtung kann somit eine bereits in der Regel am Bremssystem vorhandene Komponente und/oder eine kostengünstige Zusatzkomponente verwendet werden. Zusätzlich steigert eine derartige Ausbildung der Bremsmedium-Speichervorrichtung den Bauraumbedarf des Bremssystems nicht/kaum.

Die Erfindung ermöglicht auch die Entkopplung des ersten Bremskreises, ohne dass dazu ein Simulator oder ein festgelegter Leerweg (Pedalleerweg) an dem Bremssystem ausgebildet werden muss. Die vorteilhafte Ausführungsform ist somit kompatibel/übertragbar auf bevorzugte Typen von hydraulischen Bremssystemen. Durch den Entfall eines Simulators oder eines festgelegten Leerwegs am Bremssystem ist es nicht notwendig, den Simulator in der hydraulischen Rückfallebene aufwändig abzuschalten. Ebenso muss der Fahrer keinen Leerweg überwinden, um direkt in den Hauptbremszylinder, beziehungsweise den mindestens einen an den Hauptbremszylinder angebundenen Bremskreis, einbremsen zu können. Gleichzeitig ist mittels des zweiten Ventils der erste Bremskreis, welcher beispielsweise einer Achse eines Fahrzeugs zugeordnet ist, zur effektiven Nutzung der Rekuperation entkoppelbar.

Die stromlos geschlossene Ausbildung des ersten Ventils ist mit dem Vorteil verbunden, dass bei einer Funktionsbeeinträchtigung und/oder einem Ausfall der Elektronik des Bremssystems der Leerweg automatisch auf ein Minimum reduziert wird. Bevorzugter Weise wird der Leerweg in diesem Fall auf einen gegen Null gehenden Wert reduziert, was auch als "Abschalten" des Leerwegs umschreibbar ist. Die stromlos geöffnete Ausbildung des zweiten Ventils gewährleistet den zusätzlichen Vorteil, dass der Fahrer bei einer Funktionsbeeinträchtigung/einem Ausfall der Elektronik des Bremssystems ohne einen Leerweg direkt zumindest in den ersten Bremskreis hineinbremsen kann. Somit kann der Fahrer auf einfache Weise und mit einem leicht aufbringbaren Kraftaufwand in einer derartigen Situation das Fahrzeug noch sicher abbremsen.

Mittels der Steuervorrichtung sind das erste Ventil und das zweite Ventil gegenphasig schaltbar. Unter einem gegenphasigen Schalten des ersten Ventils und des zweiten Ventils wird verstanden, dass das zweite Ventil bei einem Öffnen des ersten Ventils automatisch geschlossen wird und das zweite Ventil bei einem Schließen des ersten Ventils automatisch geöffnet wird. Dieses vorteilhafte gegenphasige Schalten des ersten Ventils und des zweiten Ventils ist bei der in dem vorhergehenden Absatz vorteilhaften Ausbildung der beiden Ventile durch ein gemeinsames Bestromen mit einem Stromsignal kostengünstig realisierbar.
In einer vorteilhaften Weiterbildung umfasst der erste Bremskreis eine Pumpe, mittels welcher ein weiteres Bremsmediumvolumen aus einem Bremsmediumreservoir in die zwei Radbremszylinder des ersten Bremskreises pumpbar ist. Somit besteht nach einem Schließen des zweiten Ventils die Möglichkeit, über ein Pumpen des Bremsmediumvolumens aus dem Bremsmediumreservoir in die zwei Radbremszylinder des ersten Bremskreises ein von den Radbremszylindern auf mindestens ein zugeordnetes Rad ausgeübtes hydraulisches Bremsmoment aktiv aufzubauen/einzustellen. Auch nach einem Entkoppeln des ersten Bremskreises von dem Hauptbremszylinder kann somit noch ein Abbremsen der zugeordneten Räder über ein Betätigen der Pumpe bewirkt werden. Insbesondere kann über das Pumpen des weiteren Bremsmediumvolumens in die Radbremszylinder eine zeitliche Abnahme eines Generator-Bremsmoments beim Verblenden kompensiert werden.
Ergänzend kann das Bremssystem ein zwischen einer Förderseite der Pumpe und dem Bremsmediumreservoir angeordnetes Überdruckventil umfassen. In diesem Fall kann die Pumpe mit mindestens einer weiteren Pumpe des Bremssystems auf einer gemeinsamen Welle eines Motors angeordnet werden, ohne dass ein Mitbetätigen der Pumpe mit der mindestens einen weiteren Pumpe zu einem unerwünschten Druckaufbau/Überdruck in dem ersten Bremskreis führt. Stattdessen wird in einer derartigen Situation über ein Öffnen des Überdruckventils das von der Pumpe gepumpte Volumen in das Bremsmediumreservoir transferiert. Das Ausstatten des Bremssystems mit einem weiteren Motor für die mindestens zwei Pumpen ist somit nicht notwendig.
Das Bremssystem weist genau zwölf ansteuerbare Ventile auf, welche mittels mindestens eines von der Steuervorrichtung bereitgestellten elektrischen Signals zumindest in einen geöffneten Zustand und in einen geschlossenen Zustand steuerbar sind. Für ein derartiges Bremssystem ist eine kostengünstige Steuervorrichtung verwendbar.

Erfindungsgemäß umfasst das Bremssystem einen zweiten Bremskreis mit zwei zweiten Radbremszylindern, welche über ein Umschaltventil und ein Hauptschaltventil mit dem Hauptbremszylinder hydraulisch verbunden sind. Die beiden Bremskreise können bei dem Bremssystem genutzt werden, um bei unverändertem Bremsgefühl bei der Betätigung des Bremsbetätigungselements anstatt an beiden Fahrzeugachsen wahlweise an einer dem ersten Bremskreis zugeordneten ersten Achse oder an einer dem zweiten Bremskreis zugeordneten zweiten Achse zu bremsen und damit die rekuperative Effizienz des Bremssystems zu maximieren. Insbesondere kann über ein Schließen des ersten Ventils ein ausreichend langer Leerweg eingestellt werden und während einer Betätigung des Bremsbetätigungselements um einen Betätigungsweg innerhalb des Leerwegs mit dem von dem Hauptbremszylinder entkoppelten ersten Bremskreis gebremst werden, während in dem zweiten Bremskreis keine Druckerhöhung auftritt. Die erleichtert das Rekuperieren während eines Bremssystems und ermöglicht einen vorteilhaften Fahrkomfort bei einem Verblenden.
Es wird noch einmal darauf hingewiesen, dass die in den oberen Absätzen beschriebenen Vorteile bei einem Bremssystem realisiert sind, welches keinen Leerweg durch einen zwischen dem Bremsbetätigungselement und dem Schwimmkolben des Hauptbremszylinders ausgebildeten Spalt aufweist. Die Nachteile eines derartigen Spalts, wie beispielsweise die Notwendigkeit eines Simulators zum künstlichen Erzeugen eines Bremsgefühls vor dem Schließen des Spalts und/oder die zusätzliche Betätigung des Fahrers zum Schließen des Spalts entfallen somit.
Die vorliegende Erfindung ermöglicht insbesondere ein Verblenden eines Generator-Bremsmoments, ohne dass der Fahrer einen zusätzlichen Arbeitsaufwand ausführen muss. Zumindest das mindestens eine hydraulische Bremsmoment des mindestens einen Radbremszylinders des ersten Bremskreises kann nach einem Entkoppeln von dem Hauptbremszylinder (aktiv) so eingestellt werden, dass ein zeitlich variierendes Generator-Bremsmoment verblendet wird, bzw. dass eine vorteilhafte/bevorzugte Gesamtverzögerung des Fahrzeugs, beispielsweise entsprechend der Betätigung des Bremsbetätigungselements durch den Fahrer und/oder einer Vorgabe einer Geschwindigkeits-Steuerautomatik, trotz des zeitlich variierenden Generator-Bremsmoments eingehalten wird. Dabei ist ein Verblendvorgang gewährleistet, welcher keine Auswirkungen auf den Bremsweg hat.
Die vorliegende Erfindung bietet somit eine kostengünstige Alternative zu einem herkömmlichen Brake-by-Wire-Bremssystem, welche insbesondere für heck- oder allradgetriebene Fahrzeuge sehr vorteilhaft ist. Die Erfindung ist jedoch auch für den Frontantrieb mit einer By-Wire-Vorderachse einsetzbar.

Die vorliegende Erfindung ist jedoch nicht auf eine Anwendung in einem Elektro-oder Hybridfahrzeug beschränkt. Beispielsweise lässt sich auch eine querbeschleunigungsabhängige Bremskraftverteilung mittels der vorliegenden Erfindung realisieren. Bei einer querbeschleunigungsabhängigen Bremskraftverteilung wird die Bremskraft an einigen Rädern des Fahrzeugs, vorzugsweise an den beiden Hinterachsenrädern, entsprechend einer Aufstampfkraft, welche bei einer Fahrt um eine Kurve auftritt, aufgeteilt. Auf diese Weise kann der Reibwert der Räder, vor allem der Reibwert der beiden Hinterräder, an die Querbeschleunigung angeglichen werden. Das Fahrzeug bremst somit in Kurven stabiler. Vorzugsweise wird zum Ermitteln des mindestens einen aktiv einzustellenden hydraulischen Bremsmoments eine von einer Sensoreinrichtung ermittelte Querbeschleunigung herangezogen.

Zusätzlich ist eine Verwendung der vorliegenden Erfindung für ein dynamisches Kurvenbremsen möglich. Bei dem dynamischen Kurvenbremsen wird die Bremskraft an einem kurveninneren Rad gegenüber der Bremskraft an einem kurvenäußeren Rad erhöht. Dies erzielt ein dynamischeres Fahrverhalten.

Des Weiteren kann die Erfindung auch für ein vorteilhafteres Bremsen während einer Rückwärtsfahrt verwendet werden. Insbesondere wird dabei durch eine Erhöhung der Bremskraft an der Hinterachse eine für eine Rückwärtsfahrt bessere Bremskraftverteilung eingestellt. Man spricht dabei auch von einer Rückwärts-Bremskraftverteilung. Vor allem bei einer langsamen Rückwärtsfahrt bergab ermöglicht dies ein deutlich stabileres Bremsverhalten.

Trotz der Möglichkeit zum aktiven Einstellen zumindest des von dem zweiten Radbremszylinder ausgeübten (zweiten) hydraulischen Bremsmoments kann der Fahrer nach einem Schalten des Bremssystems in den ersten Betriebsmodus direkt in den zweiten Radbremszylinder hineinbremsen. Somit kann der Fahrer plötzliche Bremsvorgänge leicht auszuführen.

### Kurze Beschreibung der Zeichnungen

Weitere Merkmale und Vorteile der Erfindung werden nachfolgend anhand der Figuren erläutert. Es zeigen:
- Fig. 1: einen Schaltplan einer ersten Ausführungsform des Bremssystems;
- Fig. 2: einen Schaltplan einer zweiten Ausführungsform des Bremssystems;
- Fig. 3 und 4: jeweils einen Schaltplan einer dritten und vierten Ausführungsform des Bremssystems; und
- Fig. 5: ein Flussdiagramm zum Darstellen eines Verfahrens, welches jedoch nicht unter die vorliegende Erfindung fällt.

### Ausführungsformen der Erfindung

Die in den folgenden Figuren schematisch dargestellten Bremssysteme sind nicht nur in einem Elektro- oder Hybridfahrzeug einsetzbar. Stattdessen kann jedes dieser Bremssysteme in einem Fahrzeug beispielsweise auch für eine bevorzugte Bremskraftverteilung an den Rädern des Fahrzeugs bei einem Bremsen während einer Kurvenfahrt und/oder einer Rückwärtsfahrt eingesetzt werden. Die im Weiteren beschriebenen Hinweise auf die Einsetzbarkeit der Bremssysteme in einem Elektro- oder Hybridfahrzeug sind lediglich beispielhaft zu verstehen.

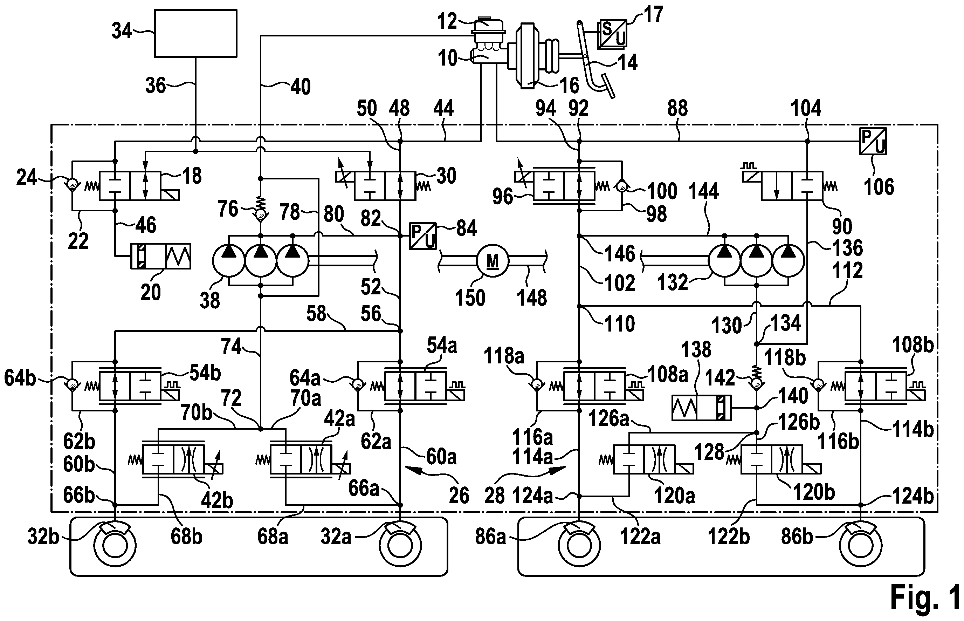

Fig. 1 zeigt einen Schaltplan einer ersten Ausführungsform des Bremssystems.

Das Bremssystem umfasst einen Hauptbremszylinder 10 und ein zusätzliches Bremsmediumreservoir 12. An dem Hauptbremszylinder 10 ist ein zumindest teilweise in diesen hinein verstellbarer (nicht dargestellter) Hauptbremszylinder-Schwimmkolben angeordnet. Unter dem Bremsmediumreservoir 12 ist nicht der Hauptbremszylinder 10 zu verstehen. Stattdessen kann unter dem Bremsmediumreservoir 12 ein BremsmediumVolumen oder ein Bremsmedium-Behälter verstanden werden, dessen Innendruck unabhängig von einem Innendruck des Hauptbremszylinders 10 einstellbar ist oder einem fest vorgegebenen Druck, wie beispielsweise dem Atmosphärendruck, entspricht. Das Bremsmediumreservoir 12 ist somit auch als Bremsmedium-Speichervorrichtung bezeichenbar, in welche ein vorgegebenes Speichervolumen des Bremsmediums des Hauptbremszylinders 10 gegendruckfrei hineintransferierbar ist. Zwischen dem Hauptbremszylinder 10 und dem Bremsmediumreservoir 12 kann eine Bremsmedium-Austauschbohrung, wie beispielsweise eine Schnüffelbohrung, ausgebildet sein. Der Hauptbremszylinder 10 und das Bremsmediumreservoir 12 können jedoch auch ohne eine hydraulische Verbindung ausgebildet sein.

An dem Hauptbremszylinder 10 kann ein Bremsbetätigungselement 14, wie beispielsweise ein Bremspedal, angeordnet sein. Als Alternative oder als Ergänzung zu einem Bremspedal kann auch ein anders ausgebildetes Bremsbetätigungselement 14 verwendet werden. Mittels einer Betätigung des Bremsbetätigungselements 14 kann ein Fahrer eines mit dem Bremssystem ausgestatteten Fahrzeugs eine Druckerhöhung in einem Innenvolumen des Hauptbremszylinders 10 bewirken. Bevorzugter Weise ist auch ein Bremskraftverstärker 16 an dem Hauptbremszylinder 10 so angeordnet, dass eine Druckerhöhung in dem Innenvolumen des Hauptbremszylinders 10 auch mittels des Bremskraftverstärkers 16 bewirkbar ist. Der Bremskraftverstärker 16 kann beispielsweise ein pneumatischer, hydraulischer Bremskraftverstärker und/oder ein elektromechanischer Bremskraftverstärker sein. Es wird darauf hingewiesen, dass die Ausführbarkeit des Bremskraftverstärkers 16 jedoch nicht auf die hier aufgezählten Beispiele beschränkt ist.

Optionaler Weise kann an dem Bremsbetätigungselement 14 auch ein Sensor 17 so angeordnet sein, dass ein Betätigen des Bremsbetätigungselements 14 durch den Fahrer mittels des Sensors 17 erfassbar ist. Vorzugsweise ist der Sensor 17 dazu ausgelegt, ein der Betätigung des Bremsbetätigungselements 14 entsprechendes Bremskraft- und/oder Bremswegsignal an eine (nicht dargestellte) Auswerteelektronik/Steuerelektronik bereitzustellen. Auf eine Verwendungsmöglichkeit für die von dem Sensor 17 bereitstellbare Information wird unten genauer eingegangen. Kostengünstiger Weise kann der Sensor 17 eine Untereinheit des Bremskraftverstärkers 16 sein. Ebenso kann der Sensor 17 ein Pedalwegsensor, ein Booster-Membranwegsensor und/oder ein Stangenwegsensor sein. Die Ausführbarkeit des Sensors 17 ist jedoch nicht auf die hier aufgeführten Beispiele beschränkt.

Das Bremssystem weist ein elektrisch steuerbares erstes Ventil 18 auf, über welches eine Speicherkammer 20 mit dem Hauptbremszylinder 10 hydraulisch verbunden ist. Die hydraulische Verbindung zwischen der Speicherkammer 20 und dem Hauptbremszylinder 10 ist derart ausgebildet, dass bei einem Verstellen des Hauptbremszylinder-Schwimmkolbens teilweise in den Hauptbremszylinder 10 hinein um einen Verstellweg unter einem vorgegebenen Grenzverstellweg ein Bremsmediumvolumen gegendruckfrei aus dem Hauptbremszylinder 10 über das (zumindest teilweise) geöffnete erste Ventil 18 in die Speicherkammer 20 transferierbar ist. Dies ist gewährleistbar, da die Speicherkammer 20 als Bremsmedium-Speichervorrichtung ausgebildet ist, in welche ein vorgegebenes Speichervolumen des Bremsmediums gegendruckfrei hineintransferierbar ist. Der vorgegebene Grenzverstellweg korrespondiert zu dem vorgegebenen Speichervolumen. Dies ist auch so umschreibbar, dass ein Volumen gleich dem Speichervolumen der Speicherkammer 20 bei dem Hineinverstellen des Hauptbremszylinder-Schwimmkolbens unter Einhaltung eines konstanten Hauptbremszylinder-Innendrucks aus dem Hauptbremszylinder 10 verdrängt wird. Über ein (zumindest Teil-)Öffnen des ersten Ventils 18 kann somit ein Druckaufbau während des Hineinverstellens des Hauptbremszylinder-Schwimmkolbens um einen Verstellweg von zumindest dem Grenzverstellweg unterbunden werden. Die sich dabei ergebenden Vorteile sind unten genauer beschrieben.

Die Speicherkammer 20 kann beispielsweise eine Niederdruck-Speicherkammer sein. Für das erste Ventil 18 ist ein Trennventil/Schaltventil verwendbar, welches sich lediglich in einen offenen Modus und in einen geschlossenen Modus elektrisch steuern lässt. Parallel zu dem ersten Ventil 18 ist vorzugsweise eine Bypassleitung 22 mit einem Rückschlagventil 24 ausgebildet, welches eine Bremsmediumverschiebung über die Bypassleitung 22 von dem Hauptbremszylinder 10 in die Speicherkammer 20 unterbindet.

Das Bremssystem ist durch ein (zumindest Teil-)Öffnen des ersten Ventils 18 in einen Modus steuerbar, in welchem eine Druckerhöhung in dem Hauptbremszylinder 10 bei dem Hineinverstellen des Hauptbremszylinder-Schwimmkolbens um den Verstellweg unter dem Grenzverstellweg unterbunden ist. Man kann dies auch so umschreiben, dass das in dem ersten Modus gesteuerte Bremssystem einen "Leerweg" korrespondierend zu dem Grenzverstellweg aufweist. Sofern das erste Ventil 18 (zumindest teilweise) geöffnet ist, kann das Bremsbetätigungselement 14 um einen Betätigungsweg bis zu dem "Leerweg" verstellt werden, ohne dass das Verstellen des Hauptbremszylinder-Schwimmkolbens um den Verstellweg bis zu dem Grenzverstellweg eine Druckerhöhung in dem Hauptbremszylinder bewirkt. Dieser in dem ersten Modus ausgebildete "Leerweg" erfordert keinen zu überwindenden/zu schließenden Spalt zwischen einem ersten Kontaktteil des Bremsbetätigungselements 14 und einem zweiten Kontaktteil des Hauptbremszylinder-Schwimmkolbens.

Zusätzlich ist das Bremssystem durch ein Schließen des ersten Ventils 18 in einen zweiten Modus steuerbar, in welchem eine Druckerhöhung in dem Hauptbremszylinder 10 mittels des Hineinverstellens des Hauptbremszylinder-Schwimmkolbens um den Verstellweg unter dem Grenzverstellweg bewirkbar ist. Nach einem Steuern des Bremssystems in den zweiten Modus durch Schließen des ersten Ventils 18 hat der Fahrer somit die Möglichkeit, über eine Betätigung des Bremsbetätigungselements 14 um einen Betätigungsweg unter dem (abschaltbaren/deaktivierbaren) "Leerweg" eine Druckerhöhung in dem Hauptbremszylinder 10 zu bewirken. Das Schließen des ersten Ventils 18 ist schneller ausführbar als das herkömmlicher Weise für einen Druckaufbau in einem Hauptbremszylinder auszuführende Überwinden/Schließen des "Leerwegs". Außerdem ist dieses elektrisch ausführbare Steuern des Bremssystems in den zweiten Modus ohne eine von dem Fahrer aufzubringende Kraft ausführbar. Wie unten genauer beschrieben wird, entfallen deshalb bei dem Bremssystem die Nachteile eines herkömmlichen Bremssystems mit einem mechanisch ausgebildeten Leerweg durch einen Spalt zwischen einem ersten Kontaktteil des Bremsbetätigungselements 14 und einem zweiten Kontaktteil des Hauptbremszylinder-Schwimmkolbens.

Das erste Ventil 18 und die Speicherkammer 20 dienen somit zur Realisierung eines veränderlichen und/oder abschaltbaren Leerwegs. Ist das erste Ventil 18 (zumindest teilweise) geöffnet, so kann das Bremsmediumvolumen aus dem Hauptbremszylinder 10 in die Speicherkammer 20 verschoben werden, ohne zunächst einen Druckaufbau in dem Hauptbremszylinder 10 und eine damit ausgelöste Bremswirkung zu erzeugen. Ist das erste Ventil 18 hingegen geschlossen, so bewirkt eine Betätigung des Bremsbetätigungselements 14 bei gleichzeitiger Mitbetätigung des Hauptbremszylinder-Schwimmkolbens direkt und vorzugsweise ohne einen mechanischen Leerweg einen Druckaufbau in dem Hauptbremszylinder 10, welche eine Bremswirkung auslösen kann.

Das erste Ventil 18 ist als stromlos geschlossenes Ventil ausgebildet. Somit wird das Bremssystem bei einer Funktionsbeeinträchtigung/einem Ausfall seiner Elektronik oder seiner Stromversorgung automatisch in den zweiten Modus gesteuert, in welchem bereits ein Betätigen des Bremsbetätigungselements 14 um einen Betätigungsweg unter dem "Leerweg" eine Druckerhöhung in dem Hauptbremszylinder 10 bewirkt. Der Fahrer kann somit das Fahrzeug in einer derartigen Situation schnell und/oder mit einem geringen Kraftaufwand abbremsen.

Das Bremssystem umfasst zwei Bremskreise 26 und 28, welche hydraulisch mit dem Hauptbremszylinder 10 verbunden sind. Der erste Bremskreis 26 ist über ein zweites Ventil 30 derart mit dem Hauptbremszylinder 10 hydraulisch verbunden, dass über das (zumindest teilweise) geöffnete zweite Ventil 30 eine Druckerhöhung in dem Hauptbremszylinder 10 in mindestens einen Radbremszylinder 32a und 32b des ersten Bremskreises 26 weiterleitbar ist. Demgegenüber ist bei einem Vorliegen des zweiten Ventils 30 in seinem geschlossenen Zustand eine Druckerhöhung in dem mindestens einen Radbremszylinder 32a und/oder 32b des ersten Bremskreises 26 trotz einer Drucksteigerung in dem Hauptbremszylinder 10 unterbunden. Ein Durchgriff von dem Hauptbremszylinder in den mindestens einen Radbremszylinder 32a oder 32b des ersten Bremskreises 26 ist deshalb bei einem geschlossenen zweiten Ventil 30 unterbunden. Somit kann über ein (zumindest Teil-)Öffnen des zweiten Ventils 30 eine hydraulische Reaktion des mindestens einen Radbremszylinders 32a und/oder 32b des ersten Bremskreises 26 auf einen Druckerhöhung in dem Hauptbremszylinder 10 gewährleistet werden, während der erste Bremskreis 26 über ein Schließen des zweiten Ventils 30 von dem Hauptbremszylinder 30 "hydraulisch entkoppelbar" ist.

In einer kostengünstigen Ausführungsform kann das zweite Ventil 30 als elektrisch steuerbares Schaltventil/Trennventil, welches lediglich in einen geschlossenen Zustand und in einen offenen Zustand schaltbar ist, ausgeführt sein. Als Alternative dazu kann das zweite Ventil auch ein stetig stellbares/stetig steuerbares Ventil sein. Das zweite Ventil 30 ist als stromlos geöffnetes Ventil ausgebildet. Somit kann der Fahrer auch bei einer Funktionsbeeinträchtigung/einem Ausfall der Elektronik oder der Stromversorgung des Bremssystems noch sicher in den ersten Bremskreis 26 hineinbremsen.

Das Bremssystem umfasst eine in ihrer Funktion nur teilweise schematisch wiedergegebene Steuervorrichtung 34, mittels welcher das erste Ventil 18 und das zweite Ventil 30 gegenphasig schaltbar sind. Über ein Bestromen der Ventile 18 und 30 mit einem Steuersignal 36 wird das stromlos geschlossen ausgebildete erste Ventil 18 bei einem Öffnen des stromlos geöffnet ausgebildeten zweiten Ventils 30 geschlossen und bei einem Schließen des zweiten Ventils 30 entsprechend geöffnet. Für die Steuervorrichtung 34 kann somit eine kostengünstige Elektronik verwendet werden.

In einer vorteilhaften Ausführungsform ist der erste Bremskreis 26 so ausgelegt, dass ein Bremsdruck in dem mindestens einen Radbremszylinder 32a und/oder 32b des ersten Bremskreises 26 nach einem Schließen des zweiten Ventils 30 unabhängig von einem in den zweiten Bremskreis 28 und dem Hauptbremszylinder 10 vorliegenden Druck aufbaubar/einstellbar ist. Nachfolgend wird eine geeignete Ausbildung des ersten Bremskreises 26 für einen aktiv einstellbaren Bremsdruck in zwei Radbremszylindern 32a und 32b nach dem Schließen des zweiten Ventils 30 beschrieben. Das hier beschriebene Bremssystem ist jedoch nicht auf eine derartige Ausbildung des ersten Bremskreises 26 beschränkt.

Bei der dargestellten Ausführungsform weist der erste Bremskreis 26 eine erste Pumpe 38 auf, mittels welcher ein Volumen aus dem Bremsmediumreservoir 12 in mindestens einen Radbremszylinder 32a und 32b pumpbar ist. Ebenso kann mittels der ersten Pumpe 38 ein Volumen aus dem ersten Bremskreis 26 in das Bremsmediumreservoir 12 zurückgefördert werden. Dazu ist der erste Bremskreis 26 über eine Saugleitung 40 mit dem Bremsmediumreservoir 12 verbunden. Zur Steuerung einer Bremsmediumverschiebung aus mindestens einem Radbremszylinder 32a und 32b in das Bremsmediumreservoir 12 kann der erste Bremskreis 26 mindestens ein stetig verstellbares Ventil umfassen, über welches die Radbremszylinder 32a und 32b hydraulisch mit dem Bremsmediumreservoir 12 verbunden sind. Die den Radbremszylindern 32a und 32b zugeordneten Radauslassventile 42a und 42b sind als stetig verstellbare Ventile ausgebildet. In diesem Fall ist das aktive Reduzieren des Bremsdrucks in den Radbremszylindern 32a und 32b durch die Bremsmediumverschiebung in das Bremsmediumreservoir 12 ohne ein zusätzliches stetig verstellbares Ventil des ersten Bremskreises 26 ausführbar. Die Bremsmediumverschiebung aus dem ersten Bremskreis 26 in das Bremsmediumreservoir 40 ist jedoch auch ausführbar, ohne dass speziell die Radauslassventile 42a und 42b als das mindestens eine stetig verstellbare Ventil ausgebildet sind.

Nachfolgend wird eine vorteilhafte Anbindung der Komponenten des ersten Bremskreises 26 an den Hauptbremszylinder 10 und an das Bremsmediumreservoir 12 beschrieben. Der erste Bremskreis 26 ist an einer ersten Zufuhrleitung 44 angeordnet, über welche das erste Ventil 18, eine von dem ersten Ventil 18 zu der Speicherkammer 20 führende Leitung 46 und die Speicherkammer 20 mit dem Hauptbremszylinder 10 verbunden sind. Das zweite Ventil 30 ist über einen Verzweigungspunkt 48 in der ersten Zufuhrleitung 44 und eine davon führende Leitung 50 mit dem Hauptbremszylinder 10 hydraulisch verbunden. Von dem zweiten Ventil 30 führt eine Leitung 52 zu einem ersten Radeinlassventil 54a, welches einem ersten Radbremszylinder 32a des ersten Bremskreises 26 zugeordnet ist. Über einen in der Leitung 52 angeordneten Verzweigungspunkt 56 und einer davon fortführenden Leitung 58 ist auch ein dem zweiten Radbremszylinder 32b des ersten Bremskreises 26 zugeordnetes Radeinlassventil 54b mit dem zweiten Ventil 30 verbunden. Jedes der beiden Radeinlassventile 54a und 54b ist über eine Leitung 60a oder 60b mit dem zugehörigen Radbremszylinder 32a und 32b verbunden. Parallel zu jedem der beiden Radeinlassventile 64a und 64b verläuft je eine Bypassleitung 62a und 62b mit einem darin angeordneten Rückschlagventil 64a und 64b. Die Rückschlagventile 64a und 64b sind derart ausgerichtet, dass eine Bremsmediumverschiebung durch die zugeordnete Bypassleitung 62a oder 62b von dem zweiten Ventil 30 zu dem zugeordneten Radbremszylinder 32a oder 32b unterbunden ist.

In jeder Leitung 60a und 60b ist ein Verzweigungspunkt 66a und 66b ausgebildet, mit welchem je eines der oben schon beschriebenen Radauslassventile 42a oder 42b über eine Leitung 68a oder 68b verbunden sind. Von jedem Radauslassventil 42a und 42b führt eine Leitung 70a und 70b zu einem gemeinsamen Verzweigungspunkt 72. Der Verzweigungspunkt 72 ist über eine Leitung 74 mit der Ansaugseite der ersten Pumpe 38 verbunden. Von der Förderseite der ersten Pumpe 38 verläuft die oben schon beschriebene Saugleitung 40. In die Saugleitung 40 ist ein Überdruckventil 76 eingesetzt, dessen Funktion unten noch genauer beschrieben wird. Parallel zu der ersten Pumpe 38 und dem Überdruckventil 76 verläuft auch eine Bypassleitung 78, welche die Leitung 74 mit der Saugleitung 40 verbindet. Außerdem ist die Förderseite der ersten Pumpe 38 über eine Leitung 80 mit einem in der Leitung 52 ausgebildeten Verzweigungspunkt 82 verbunden. Mit der Leitung 52 ist auch ein erster Drucksensor 84 des ersten Bremskreises 26 verbunden.

Das Bremssystem weist zusätzlich zu dem ersten Bremskreis 26 noch den zweiten Bremskreis 28 auf.
Der zweite Bremskreis 28 ist so ausgebildet, dass der Bremsdruck in dem mindestens einen Radbremszylinder 86a und 86b des zweiten Bremskreises 28 bei einer Steigerung des Innendrucks in dem Hauptbremszylinder 10 (automatisch) zunimmt. Man kann dies auch so umschreiben, dass der Fahrer nach einer Überwindung des Mittels eines (zumindest Teil-)Öffnens des ersten Ventils 18 einstellbaren Leerwegs und/oder nach einem Abschalten/Deaktivieren des Leerwegs durch Schließen des ersten Ventils 18 die Möglichkeit hat, direkt in den mindestens einen Radbremszylinder 86 des zweiten Bremskreises 28 einzubremsen. Insbesondere kann der zweite Bremskreis 28 kann einem konventionellen ESP-System entsprechen.
Der zweite Bremskreis 28 ist über eine zweite Zufuhrleitung 88, welche zu einem Hauptschaltventil 90 des zweiten Bremskreises 28 führt, mit dem Hauptbremszylinder 10 hydraulisch verbunden. Über einen in der zweiten Zufuhrleitung 88 ausgebildeten Verzweigungspunkt 92 und eine davon fortführende Leitung 94 ist auch ein Umschaltventil 96 des zweiten Bremskreises 28 mit dem Hauptbremszylinder 10 verbunden. Parallel zu dem Umschaltventil 96 verläuft eine Bypassleitung 98 in welcher ein Rückschlagventil 100 angeordnet ist. Das Rückschlagventil 100 ist so ausgerichtet, dass eine Bremsmediumverschiebung durch die Bypassleitung 98 von einer radbremszylinderseitig an dem Umschaltventil 96 angeordneten Leitung 102 zu der Leitung 94 unterbunden ist. Über einen Verzweigungspunkt 104 in der zweiten Zufuhrleitung 88 ist auch ein zweiter Drucksensor 106 an dem zweiten Bremskreis 28 angeordnet.

Die Leitung 102 verbindet das Umschaltventil 96 mit einem ersten Radeinlassventil 108a, welches dem ersten Radbremszylinder 86a des zweiten Bremskreises 28 zugeordnet ist. Über einen in der Leitung 102 ausgebildeten Verzweigungspunkt 110 und eine davon führende Leitung 112 ist auch ein dem zweiten Radbremszylinder 86b des zweiten Bremskreises 28 zugeordnetes Radeinlassventil 108b mit dem Umschaltventil 96 verbunden. Jedes der beiden Radeinlassventile 108a und 108b ist über je eine Leitung 114a oder 114b mit dem zugeordneten Radbremszylinder 86a oder 86b des zweiten Bremskreises 28 verbunden. Parallel zu den beiden Radeinlassventilen 108a und 108b verläuft je eine Bypassleitung 116a und 116b mit je einem Rückschlagventil 118a und 118b. Jedes der Rückschlagventile 118a und 118b ist so ausgerichtet, dass eine Bremsmediumverschiebung durch die zugeordnete Bypassleitung 116a oder 116b von der Leitung 102 zu dem zugeordneten Radbremszylinder 86a oder 86b unterbunden ist. Jedem der beiden Radbremszylinder 86a und 86b des zweiten Bremskreises 28 ist auch je ein Radauslassventil 120a und 120b zugeordnet, welches über je eine Leitung 122a oder 122b mit einem in der Leitung 114a ausgebildeten Verzweigungspunkt 124a oder einem in der Leitung 114b ausgebildeten Verzweigungspunkt 124b verbunden ist. Die beiden Radauslassventile 120a und 120b sind auch über je eine Leitung 126a und 126b mit einem gemeinsamen Verzweigungspunkt 128 verbunden. Von dem Verzweigungspunkt 128 verläuft eine Leitung 130 zu einer Ansaugseite einer zweiten Pumpe 132. Über einen in der Leitung 130 ausgebildeten Verzweigungspunkt 134 und eine Leitung 136 ist auch das Hauptschaltventil 90 mit der Förderseite der zweiten Pumpe 132 verbunden. Außerdem ist eine weitere Speicherkammer 138 über einen in der Leitung 130 ausgebildeten Verzweigungspunkt 140 mit der Förderseite der zweiten Pumpe 132 verbunden. Ein Überdruckventil 142 in der Leitung 130 ist so ausgerichtet, dass eine Bremsmediumverschiebung von den Radauslassventilen 120a und 120b zu der Ansaugseite der zweiten Pumpe 132 nur bei einem bestimmten Druck möglich ist. Die Förderseite der zweiten Pumpe 132 ist über eine Leitung 144 mit einem in der Leitung 102 ausgebildeten Verzweigungspunkt 146 verbunden.

Die erste Pumpe 38 und die zweite Pumpe 132 sind bevorzugter Weise auf einer gemeinsamen Welle 148 eines Motors 150 angeordnet. Das in der Saugleitung 40 angeordnete Überdruckventil gewährleistet bei einem Mitbetreiben der ersten Pumpe 38 zusammen mit der zweiten Pumpe 132 ein Zurücktransferieren des von der ersten Pumpe 38 aus dem Bremsmediumreservoir 12 gepumpte Bremsmediumvolumen in das Bremsmediumreservoir 12, so dass kein Überdruck in dem ersten Bremskreis 26 aufgebaut wird. Beispielsweise sind die beiden Radeinlassventile 54a und 54b bei mitlaufender erster Pumpe 38 geschlossen, wenn bei einem Einhalten des Bremsdrucks in dem ersten Bremskreis 26 der Bremsdruck in dem zweiten Bremskreis mittels der zweiten Pumpe 132 erhöht werden soll. In diesem Fall baut sich herkömmlicher Weise zwischen der Förderseite der ersten Pumpe 38 und den Radeinlassventilen 54a und 54b oft ein hoher Druck auf. Durch die vorteilhafte Anordnung des Überdruckventils 96 kann das geförderte Volumen jedoch über das geöffnete Überdruckventil 76 in das Bremsmediumreservoir 12 transferiert werden. Auf diese Weise können Schäden an der Hydraulikeinheit oder ein ungewolltes Öffnen eines Ventils 54a oder 54b verhindert werden.

Aufgrund der vorteilhaften Auslegung des zweiten Bremskreises 28 ist auch bei einem Mitbetreiben der zweiten Pumpe 132 zusammen mit der ersten Pumpe 38 ein unerwünschter Druckaufbau in dem zweiten Bremskreis 28 unterbunden. Insbesondere durch ein Schließen des Hauptschaltventils 90 ist gewährleistbar, dass ein Mitbetreiben der zweiten Pumpe 132 keinen ungewollten (zusätzlichen) Druckaufbau in dem zweiten Bremskreis 28 bewirkt.

Die erste Pumpe 38 und/oder die zweite Pumpe 132 können eine Drei-Kolben-Pumpe sein. Das hier beschriebene Bremssystem ist somit als Sechs-Kolben-ESP-System ausführbar. Anstelle einer Drei-Kolben-Pumpe kann jedoch auch eine Pumpe mit einer anderen Kolbenanzahl, eine asymmetrische Pumpe und/oder eine Zahnradpumpe als erste Pumpe 38 und/oder als zweite Pumpe 132 eingesetzt werden.

Das in Fig. 1 dargestellte Bremssystem weist genau zwölf elektrisch ansteuerbare Ventile 18, 30, 42a, 42b, 54a, 54b, 90, 96, 108a, 108b, 120a und 120b auf, welche mittels der Steuervorrichtung 34 zumindest in einen geöffneten und in einen geschlossenen Zustand steuerbar sind. Aufgrund der Anzahl von ansteuerbaren Ventilen ist die Steuervorrichtung 34 kostengünstig ausführbar. Bevorzugter Weise sind die Radeinlassventile 54a, 54b, 108a und 108b und das Umschaltventil 96 als stromlos offene Ventile ausgebildet. Demgegenüber wird für die Radauslassventile 42a, 41 b, 120a und 120b und das Hauptschaltventil 90 eine stromlos geschlossene Ausbildung bevorzugt.

Die beiden Radbremszylinder 32a und 32b des ersten Bremskreises 26 können den Rädern einer ersten Fahrzeugachse zugeordnet sein, während die beiden Radbremszylinder 86a und 86b des zweiten Bremskreises 28 an den Rädern einer zweiten Fahrzeugachse angeordnet sind. Bevorzugter Weise sind die Radbremszylinder 32a und 32b des ersten Bremskreises 26 der Hinterachse zugeordnet. In diesem Fall ist es vorteilhaft, wenn auch ein (nicht skizzierter) Generator an der Hinterachse angeordnet ist. Das hier beschriebene Bremssystem ist jedoch nicht auf eine achsweise Bremskreisaufteilung beschränkt. Stattdessen kann das Bremssystem auch für ein Fahrzeug mit einer X-Bremskreisaufteilung verwendet werden.

Nachfolgend wird eine besonders vorteilhafte Vorgehensweise zum Einsetzen des oben beschriebenen Bremssystems für ein Verblenden eines Generator-Bremsmoments beschrieben. Die Anwendbarkeit des Bremssystems ist jedoch nicht auf diesen Vorgang beschränkt:
Im ungebremsten Fall, das heißt bei einer Nicht-Betätigung des Bremsbetätigungselements 14 sind alle Ventile 18, 30, 42a, 42b, 54a, 54b, 90, 96, 108a, 108b, 120a und 120b stromlos. Bei einer Betätigung des Bremsbetätigungselements bremst der Fahrer (vorzugsweise ohne ein Überwinden eines Luftspalts zwischen dem Bremsbetätigungselements 14 und dem Hauptbremszylinder-Schwimmkolben) in den Hauptbremszylinder 10 ein. Mittels des Sensors 14, bzw. einer entsprechenden Sensorik, kann der Bremswunsch des Fahrers sofort erfasst werden. Unter Berücksichtigung des Ladezustands der Batterie, der aktuellen Fahrzeuggeschwindigkeit, der aktuellen Verkehrssituation, der erfassten Umgebungsbedingungen, der Fahrerbremskraft, des Bremswegs und/oder der Geschwindigkeit der Betätigung des Bremsbetätigungselements 14 kann anschließend festgelegt werden, ob der Bremsvorgang für ein Aufladen der mit dem Generator verbundenen Batterie genutzt werden soll. Ist das Aufladen der Batterie nicht vorgesehen, werden das erste Ventil 18 in den geschlossenen Zustand und das zweite Ventil 30 in den geöffneten Zustand gesteuert. Die Betätigung des Bremsbetätigungselements 14 führt in diesem Fall zu einer Steigerung des Innendrucks in dem Hauptbremszylinder 10 und korrespondierend zu einer (automatischen) Zunahme des Bremsdrucks in den Radbremszylindern 32a, 32b, 86a und 86b.

Sofern der Bremsvorgang für ein Aufladen der mit dem Generator verbundenen Batterie genutzt werden soll, kann bei Erkennung des Fahrerbremswunsches das erste Ventil 18 geöffnet und das zweite Ventil 30 geschlossen werden. Somit kann zumindest das oben schon genannte vorgegebene Speichervolumen des Bremsmediums gegendruckfrei in die Speicherkammer 20 verschoben werden. Ein Druckaufbau in dem Hauptbremszylinder 10 ist damit unterbunden. Entsprechend wird in keinem der beiden Bremskreise 26 und 28 ein Druck erhöht. Stattdessen kann der Generator eingesetzt werden, um ohne ein Überschreiten der von dem Fahrer vorgegebenen Höchst-Fahrzeugverzögerung die Batterie aufzuladen. Damit ist eine im Vergleich zu einem herkömmlichen Leerweg durch Ausbildung eines Spalts zwischen dem Bremsbetätigungselement 14 und dem Hauptbremszylinder-Schwimmkolben identische Funktionalität realisiert.

Ergänzend besteht die Möglichkeit, eine Differenz zwischen einem von dem Fahrer mittels der Betätigung des Bremsbetätigungselements 14 vorgegebenen Soll-Gesamt-Bremsmoment und dem ausgeübten Generator-Bremsmoment festzulegen und anschließend den Bremsdruck in mindestens einem der von dem Hauptbremszylinder 10 entkoppelten Radbremszylinder 32a und 32b des ersten Bremskreises aktiv so einzustellen, dass das Soll-Gesamt-Bremsmoment eingehalten wird. Dies ist über ein entsprechendes Ansteuern der ersten Pumpe 38 und/oder mindestens eines der beiden Radauslassventile 42a und 42b möglich. Der Verblendungsvorgang wird somit vom Fahrer nicht/kaum wahrgenommen.

Eine vorteilhafte Ansteuerung der Radauslassventile 42a und 42b des ersten Bremskreises 26 zum aktiven Einstellen des Bremsdrucks in den zugeordneten Radbremszylindern 32a und 32b ist ausführbar, indem bei einem vollständigen Schließen eines der beiden Radauslassventile 42a oder 42b die Regelung des Gesamt-Bremsdruckes der beiden Radbremszylinder 32a und 32b über das andere (nichtgeschlossene) Radauslassventil 42a oder 42b erfolgt. Insbesondere für ein Entbremsen kann mindestens eines der beiden Radauslassventile 42a und 42b des ersten Bremskreises 26 geöffnet und der Gesamt-Bremsdruck in den zugehörigen Radbremszylindern 32a und 32b entsprechend dem abnehmenden Bremswunsch eingestellt werden. Das aus dem mindestens einen Radbremszylinder 32a und 32b austretende Bremsmediumvolumen kann über mindestens eines der Radauslassventile 42a oder 42b in das Bremsmediumreservoir 12 zurücktransferiert werden. Andere Ansteuerungsstrategien zum aktiven Einstellen der Bremsdrücke in den beiden Radbremszylindern 32a und 32b des ersten Bremskreises 26 sind ebenfalls ausführbar. Anstelle einer Einstellung des Bremsdrucks in den Radbremszylindern 32a und 32b mittels Δ-P-Ansteuerung der Radauslassventile 42a und 42b kann außerdem auch eine Druckregelung unter Verwendung des ersten Drucksensors 84 oder mindestens eines Drucksensors an einem den Radbremszylindern 32a oder 32b zugeordneten Rad ausgeführt werden.

Nach dem Verschieben des vorgegebenen Speichervolumens in die Speicherkammer 20 kann der Druckaufbau in dem zweiten Bremskreis 28 konventionell und unabhängig von dem Gesamt-Bremsdruck der beiden Radbremszylinder 32a und 32b des ersten Bremskreises 26 erfolgen, bzw. durch den Fahrer moduliert werden. Ebenso sind auch aktive Druckaufbauten ohne eine Betätigung des Bremsbetätigungselements 14 durch den Fahrer auf konventionelle Weise durch Öffnen des Hauptschaltventils 90 in dem zweiten Bremskreis 28 ausführbar.

Es wird darauf hingewiesen, dass die in den oberen Absätzen beschriebene Vorgehensweise zum Einhalten einer von dem Fahrer vorgegebenen Soll-Fahrzeugverzögerung auch ohne ein Aktivieren des Generators ausführbar ist.

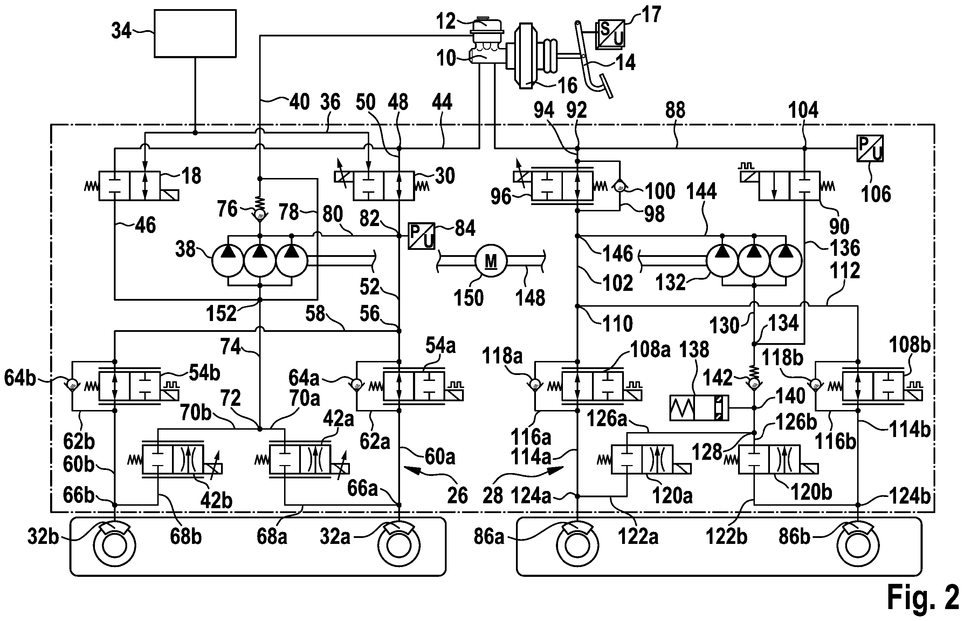

Fig. 2 zeigt einen Schaltplan einer zweiten Ausführungsform des Bremssystems.

Das in Fig. 2 dargestellte Bremssystem unterscheidet sich von der oben beschriebenen Ausführungsform darin, dass auf eine Ausstattung des Bremssystems mit einer Speicherkammer als Bremsmedium-Speichervorrichtung verzichtet wird. Stattdessen ist das erste Ventil 18 über die Leitung 46 und den Verzweigungspunkt 152 in der Leitung 74 mit dem Bremsmediumreservoir 12 verbunden.

Das erste Ventil 18 öffnet bzw. schließt somit eine hydraulische Verbindung zwischen dem Hauptbremszylinder 10 und dem Bremsmediumreservoir 12. Somit besteht die Möglichkeit, nach einem Öffnen des ersten Ventils 18 das bei einem Verstellen des Hauptbremszylinder-Schwimmkolbens um einen Verstellweg unter dem zu dem Bremsmediumreservoir 12 korrespondierenden Grenzverstellweg aus dem Hauptbremszylinder 10 verschobene Bremsmediumvolumen gegendruckfrei in das Bremsmediumreservoir 12 zu transferieren. Nach dem Öffnen des ersten Ventils 18 bewirkt deshalb das Hineinverstellen des Hauptbremszylinder-Schwimmkolbens um den Verstellweg unter dem Grenzverstellweg keine Bremswirkung eines Radbremszylinders 32a, 32b, 86a oder 86b. Ist das erste Ventil 18 hingegen geschlossen, so bewirkt eine Betätigung des Hauptbremszylinder-Schwimmkolbens/des Bremsbetätigungselements 14 direkt und ohne Leerweg eine Bremsdruck-Steigerung zumindest in den Radbremszylindern 86a und 86b. Auch die hier dargestellte Ausführungsform ermöglicht somit eine variable Leerweg-Einstellung mit den oben schon beschriebenen Vorteilen, insbesondere mit der vorteilhaften Einsetzbarkeit des Bremssystems bei einem Verblenden eines Generator-Bremsmoments.

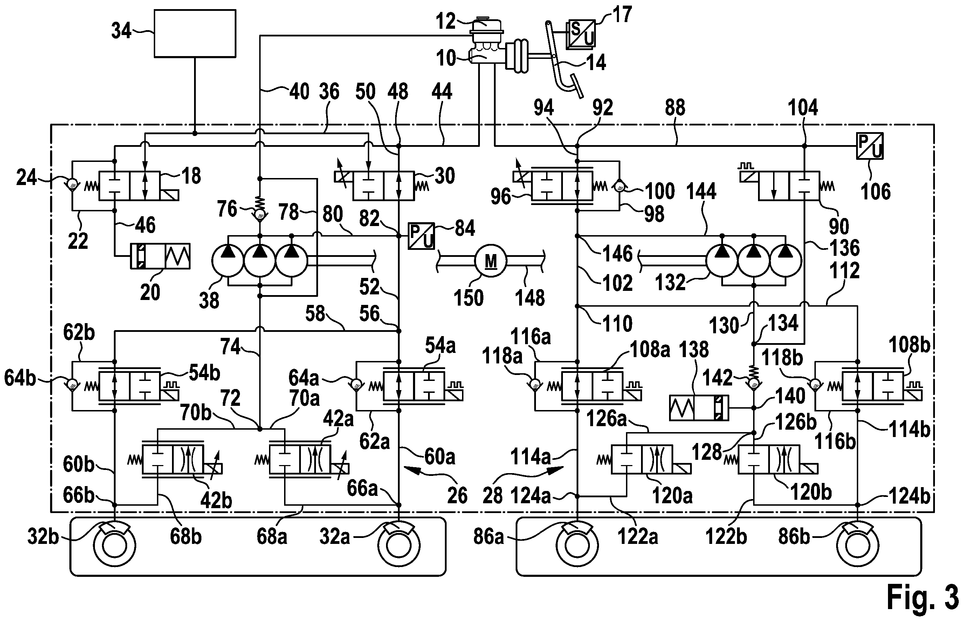

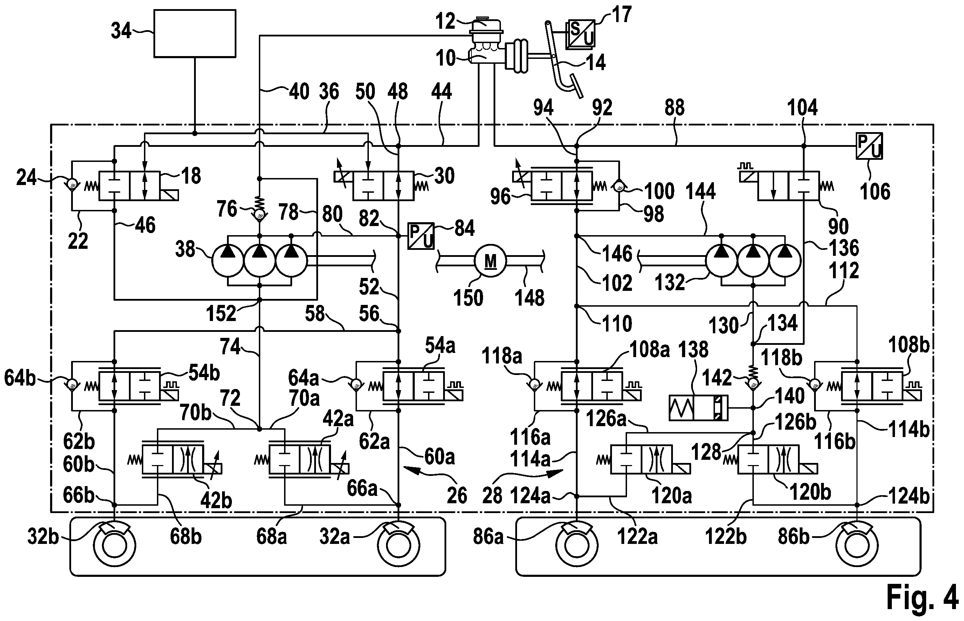

Fig. 3 und Fig. 4 zeigen jeweils einen Schaltplan einer dritten und vierten Ausführungsform des Bremssystems.

Die in Fig. 3 und Fig. 4 dargestellten Ausführungsformen weisen gegenüber den oben beschriebenen Bremssystemen keinen Bremskraftverstärker auf. Bevorzugter Weise werden die hier beschriebenen Bremssysteme an einem Fahrzeug so eingesetzt, dass mittels der Radbremszylinder 32a und 32b des ersten Bremskreises 26 die an der Vorderachse des Fahrzeugs angeordneten Räder abbremsbar sind. Vor allem bei einer derartigen Einsetzung der Bremssysteme sind die oben schon aufgezählten Vorteile gewährleistet.

Der Fahrer hat somit die Möglichkeit, unverstärkt in die Hinterachse einzubremsen und auf diese Weise ein vorteilhaftes Bremsgefühl (Pedalgefühl) zu erhalten. Der Druckaufbau an der Vorderachse kann aktiv erfolgen, wobei bevorzugter Weise automatisch eine den Fahrer kraftmäßig entlastende Verstärkung des Fahrerbremswunsches ausgeführt wird. Außerdem weisen diese Bremssysteme auch bei einer fehlenden Vakuumverfügbarkeit die Vorteile einer einstellbaren Bremskraftverteilung auf.

Alle oben beschriebenen Bremssysteme gewährleisten gegenüber einem standardgemäßen Bremssystem zusätzlich den Vorteil, dass aufgrund der schnellen Erkennung eines Fahrerbremswunsches mittels des Sensors 17 bereits frühzeitig auf den Fahrerbremswunsch des Fahrers reagierbar ist.

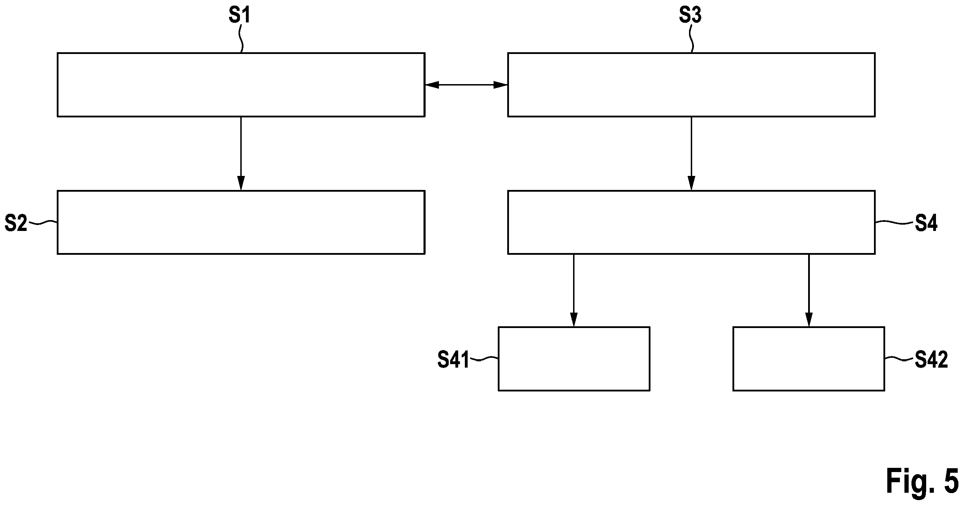

Fig. 5 zeigt ein Flussdiagramm zum Darstellen einer Ausführungsform eines Verfahrens zum Betreiben eines Bremssystems eines Fahrzeuges, welches nicht unter die vorliegende Erfindng fällt.

Das in Fig. 5 dargestellte Verfahren ist ausführbar mit einem Bremssystem mit einem Hauptbremszylinder mit einem zumindest teilweise in den Hauptbremszylinder hineinverstellbaren Hauptbremszylinder-Schwimmkolben und einer Bremsmedium-Speichervorrichtung, in welche ein vorgegebenes Speichervolumen eines Bremsmediums gegendruckfrei hineintransferierbar ist. Es wird darauf hingewiesen, dass die Ausführbarkeit des Verfahrens nicht auf die oben beschriebenen Bremssysteme beschränkt ist.

In einem wahlweise ausführbaren Verfahrensschritt S1 wird ein Innendruck in dem Hauptbremszylinder bei einem Verstellen des Hauptbremszylinder-Schwimmkolbens teilweise in den Hauptbremszylinder um einen Verstellweg unter einem dem Speichervolumen entsprechenden Grenzverstellweg gesteigert. Dies geschieht durch Schließen eines elektrisch steuerbaren ersten Ventils, über welches die Bremsmedium-Speichervorrichtung mit dem Hauptbremszylinder hydraulisch verbunden ist. Optionaler Weise wird zusammen mit dem Verfahrensschritt S1 auch ein Verfahrensschritt S2 ausgeführt, bei welchem ein zweites Ventil, über welches ein Bremskreis des Bremssystems mit mindestens einem Radbremszylinder mit dem Hauptbremszylinder hydraulisch verbunden ist, in einen zumindest teilweise geöffneten Modus gesteuert wird.

Wahlweise kann anstelle der oben beschriebenen Verfahrensschritte auch ein Verfahrensschritt S3 ausgeführt werden, in welchem eine Steigerung des Innendrucks in dem Hauptbremszylinder bei dem Verstellen des Hauptbremszylinder-Schwimmkolbens um den Verstellweg unter dem Grenzverstellweg durch ein zumindest Teilöffnen des ersten Ventils unterbunden wird. Somit ist gewährleistet, dass ein Bremsmediumvolumen kleiner als das vorgegebene Speichervolumen gegendruckfrei aus dem Hauptbremszylinder über das zumindest teilweise geöffnete erste Ventil in die Bremsmedium-Speichervorrichtung transferiert wird. Bevorzugter Weise wird zusammen mit dem Verfahrensschritt S3 auch, zumindest wenn das erste Ventil (vollständig) geöffnet wird, das zweite Ventil in einen geschlossenen Modus gesteuert (Verfahrensschritt S4).

Ergänzend dazu kann nach dem Schließen des zweiten Ventils ein Bremsmediumvolumen aus einem Bremsmediumreservoir in den mindestens einen Radbremszylinder des Bremskreises gepumpt werden (Verfahrensschritt S41). Als Alternative oder als Ergänzung zu dem Verfahrensschritt S41 kann in einem Verfahrensschritt S42 auch mindestens ein stetig verstellbares Ventil des Bremskreises, über welches der mindestens eine Radbremszylinder hydraulisch mit dem Bremsmediumreservoir verbunden ist, geöffnet werden. Auf diese Weise ist eine Bremsmediumverschiebung aus dem mindestens einen Radbremszylinder in das Bremsmediumreservoir ausführbar. Mittels der Verfahrensschritte S41 und S42 ist der Bremsdruck in dem mindestens einen Radbremszylinder des Bremskreises aktiv einstellbar.

Bevorzugter Weise wird bei dem Verfahrensschritt S42 nur eines von einem ersten Radauslassventil und einem zweiten Radauslassventil des Bremskreises als stetig verstellbares Ventil zumindest teilweise geöffnet zum Ausführen der Bremsmediumverschiebung aus einem ersten Radbremszylinder oder aus einem zweiten Radbremszylinder des Bremskreises in das Bremsmediumreservoir. Muss beispielsweise eines der beiden Radeinlassventile des Bremskreises aufgrund einer ABS-Regelung am zugeordneten Rad geschlossen werden/bleiben, so kann die Druckeinstellung über das dem anderen Rad der gemeinsamen Achse zugeordnete Radauslassventil erfolgen. Die Funktionalität der regelbaren Druckeinstellung kann also wahlweise mit einem Radauslassventil der beiden Radauslassventile einer gemeinsamen Achse ausgeführt werden. Auch ein eventuell notwendiges vollständiges Entbremsen ist auf diese Weise ausführbar. Somit ist das hier beschriebene Verfahren kombinierbar mit der herkömmlichen ABS-Regelung.

## Patentansprüche

1. Bremssystem für ein Fahrzeug mit
einem Hauptbremszylinder (10) mit einem zumindest teilweise in den Hauptbremszylinder (10) hinein verstellbaren Hauptbremszylinder-Schwimmkolben;
einer Bremsmedium-Speichervorrichtung (12, 20), in welche ein vorgegebenes Speichervolumen eines Bremsmediums hinein transferierbar ist, wobei die Bremsmedium-Speichervorrichtung (12, 20) ein Bremsmediumreservoir (12) oder eine Niederdruck-Speicherkammer (20) ist;
einem stromlos geschlossenen ersten Ventil (18), welches über eine erste Zufuhrleitung (44) mit dem Hauptbremszylinder (10) hydraulisch verbunden ist und über welches die Bremsmedium-Speichervorrichtung (12, 20) mit dem Hauptbremszylinder (10) hydraulisch derart verbunden ist, dass bei einem Verstellen des Hauptbremszylinder-Schwimmkolbens teilweise in den Hauptbremszylinder (10) um einen Verstellweg unter einem dem Speichervolumen entsprechenden Grenzverstellweg ein Bremsmediumvolumen kleiner als das vorgegebene Speichervolumen aus dem Hauptbremszylinder (10) über das zumindest teilweise geöffnete erste Ventil (18) in die Bremsmedium-Speichervorrichtung (12, 20) transferierbar ist;
einem ersten Bremskreis (26) mit zwei Radbremszylindern (32a, 32b) und je einem Radeinlassventil (54a, 54b) und je einem Radauslassventil (42a, 42b) pro Radbremszylinder (32a, 32b), wobei jedes der zwei Radeinlassventile (54a, 54b) und der zwei Radauslassventile (42a, 42b) des ersten Bremskreises (26) zwei Anschlüsse aufweist und je ein stetig verstellbares Ventil ist;
einem stromlos geöffneten zweiten Ventil (30), welches über einen Verzweigungspunkt (48) in der ersten Zufuhrleitung (44) mit dem Hauptbremszylinder (10) hydraulisch verbunden ist und über welches der erste Bremskreis (26) mit dem Hauptbremszylinder (10) hydraulisch so verbunden ist, dass über das geschlossene zweite Ventil (30) eine Druckerhöhung in den zwei Radbremszylindern (32a, 32b) des ersten Bremskreises (26) bei der Druckerhöhung in dem Hauptbremszylinder (10) unterbindbar ist, und über das zumindest teilweise geöffnete zweite Ventil (30) eine Druckerhöhung in den zwei Radbremszylindern (32a, 32b) des ersten Bremskreises (26) bei der Druckerhöhung in dem Hauptbremszylinder (10) transferierbar ist;
einem zweiten Bremskreis (28) mit zwei Radbremszylindern (86a, 86b), einem Umschaltventil (96), einem Hochdruckschaltventil (90), und je einem Radeinlassventil (108a, 108b) und je einem Radauslassventil (120a, 120b) pro Radbremszylinder (86a, 86b), wobei jedes der zwei Radeinlassventile (54a, 54b) des zweiten Bremskreises (28) zwei Anschlüsse aufweist und je ein stetig verstellbares Ventil ist und jedes der zwei Radauslassventile (42a, 42b) des zweiten Bremskreises (28) zwei Anschlüsse aufweist und je ein Schaltventil ist, wobei der zweite Bremskreis (28) über eine zu dem Hochdruckschaltventil (90) führende zweite Zufuhrleitung (88) mit dem Hauptbremszylinder (10) hydraulisch verbunden ist, und wobei das Umschaltventil (96) über einen in der zweiten Zufuhrleitung (88) ausgebildeten Verzweigungspunkt (92) auch mit dem Hauptbremszylinder (10) hydraulisch verbunden ist; und
einer Steuervorrichtung (34), mittels welcher jedes der zwei Radeinlassventile (54a, 54b) und der zwei Radauslassventile (42a, 42b) des ersten Bremskreises (26), jedes der zwei Radeinlassventile (54a, 54b) und der zwei Radauslassventile (42a, 42b) des zweiten Bremskreises (28), das Umschaltventil (96) und das Hochdruckschaltventil (90) steuerbar sind und zusätzlich das erste Ventil (18) und das zweite Ventil (30) gegenphasig so schaltbar sind, dass durch ein Steuern des ersten Ventils (18) in seinen geöffneten Zustand und des zweiten Ventils (30) in seinen geschlossenen Zustand das Bremssystem in einen ersten Modus steuerbar ist, in welchem eine Druckerhöhung in dem Hauptbremszylinder (10) bei dem Verstellen des Hauptbremszylinder-Schwimmkolbens teilweise in den Hauptbremszylinder (10) um den Verstellweg unter dem Grenzverstellweg unterbunden ist, und durch ein Steuern des ersten Ventils (18) in seinen geschlossenen Zustand und des zweiten Ventils (30) in seinen geöffneten Zustand das Bremssystem in einen zweiten Modus steuerbar ist, in welchem eine Druckerhöhung in dem Hauptbremszylinder (10) mittels des Verstellens des Hauptbremszylinder-Schwimmkolbens teilweise in den Hauptbremszylinder (10) um den Verstellweg unter dem Grenzverstellweg gewährleistet ist,
**dadurch gekennzeichnet, dass**
durch das Steuern des ersten Ventils (18) in seinen geöffneten Zustand und des zweiten Ventils (30) in seinen geschlossenen Zustand ein Durchgriff von dem Hauptbremszylinder (10) in die zwei Radbremszylinder (32a, 32b) des ersten Bremskreises (26) und eine Druckerhöhung in den zwei Radbremszylindern (32a, 32b) des ersten Bremskreises (26) trotz einer Drucksteigerung in dem Hauptbremszylinder aufgrund des geschlossenen zweiten Ventils (30) unterbunden sind;
durch das Steuern des ersten Ventils (18) in seinen geschlossenen Zustand und des zweiten Ventils (30) in seinen geöffneten Zustand eine Druckerhöhung in dem Hauptbremszylinder (10) über das zumindest teilweise geöffnete zweite Ventil (30) in die zwei Radbremszylinder (32a, 32b) des ersten Bremskreises (26) weiterleitbar ist; und
das Bremssystem genau zwölf ansteuerbare Ventile (18, 30, 42a, 42b, 54a, 54b, 90, 96, 108a, 108b, 120a, 120b) als das erste Ventil (18), das zweite Ventil (30), die zwei Radeinlassventile (54a, 54b) und die zwei Radauslassventile (42a, 42b) des ersten Bremskreises (26), die zwei Radeinlassventile (54a, 54b) und die zwei Radauslassventile (42a, 42b) des zweiten Bremskreises (28), das Umschaltventil (96) und das Hochdruckschaltventil (90) aufweist, welche mittels mindestens eines von der Steuervorrichtung (34) bereitgestellten elektrischen Steuersignals (36) zumindest in ihren geöffneten Zustand und in ihren geschlossenen Zustand steuerbar sind, wobei das erste Ventil (18) in seinen geöffneten Zustand und das zweite Ventil (30) in seinen geschlossenen Zustand durch ein gemeinsames Stromsignal der Steuervorrichtung (34) als Steuersignal (36) gegenphasig schaltbar sind.

2. Bremssystem nach Anspruch 1, wobei der erste Bremskreis (26) eine Pumpe (38) umfasst, mittels welcher ein weiteres Bremsmediumvolumen aus dem als Bremsmedium-Speichervorrichtung (12, 20) genutzten oder einem zusätzlichen Bremsmediumreservoir (12) in den zwei Radbremszylindern (32a, 32b) des ersten Bremskreises (26) pumpbar ist.

3. Bremssystem nach Anspruch 2, wobei das Bremssystem ein zwischen einer Förderseite der Pumpe (38) und dem Bremsmediumreservoir (12) angeordnetes Überdruckventil (76) umfasst.

## Claims

1. Brake system for a vehicle having
a master brake cylinder (10) having a master-break-cylinder floating piston which can be adjusted at least partially into the master brake cylinder (10);
a braking-medium storage device (12, 20) into which a predefined storage volume of a braking medium can be transferred, wherein the braking-medium storage device (12, 20) is a braking-medium reservoir (12) or a low-pressure storage chamber (20);
a first valve (18) which is closed in the currentless state and which is hydraulically connected to the master brake cylinder (10) via a first feed line (44) and via which the braking-medium storage device (12, 20) is hydraulically connected to the master brake cylinder (10) in such a way that, when the master-break-cylinder floating piston is adjusted partially into the master brake cylinder (10) by an adjustment travel below a limiting adjustment travel which corresponds to the storage volume, a braking-medium volume which is less than the predefined storage volume can be transferred from the master brake cylinder (10) into the braking-medium storage device (12, 20) via the at least partially opened first valve (18);
a first brake circuit (26) having two wheel brake cylinders (32a, 32b) and in each case one wheel inlet valve (54a, 54b) and in each case one wheel outlet valve (42a, 42b) per wheel brake cylinder (32a, 32b), wherein each of the two wheel inlet valves (54a, 54b) and of the two wheel outlet valves (42a, 42b) of the first brake circuit (26) has two ports and is in each case one continuously adjustable valve;
a second valve (30) which is opened in the currentless state and which is hydraulically connected to the master brake cylinder (10) via a branching point (48) in the first feed line (44) and via which the first brake circuit (26) is hydraulically connected to the master brake cylinder (10) in such a way that by means of the closed second valve (30) a pressure increase in the two wheel brake cylinders (32a, 32b) of the first brake circuit (26) can be prevented in the case of the pressure increase in the master brake cylinder (10), and by means of the at least partially open second valve (30) an increase in pressure in the two wheel brake cylinders (32a, 32b) of the first brake circuit (26) can be transferred when there is an increase in pressure in the master brake cylinder (10);
a second brake circuit (28) having two wheel brake cylinders (86a, 86b), a switch-over valve (96), a high-pressure switching valve (90) and in each case one wheel inlet valve (108a, 108b) and in each case one wheel outlet valve (120a, 120b) per wheel brake cylinder (86a, 86b), wherein each of the two wheel inlet valves (54a, 54b) of the second brake circuit (28) has two ports and is in each case a continuously adjustable valve and each of the two wheel outlet valves (42a, 42b) of the second brake circuit (28) has two ports and is in each case one switching valve, wherein the second brake circuit (28) is hydraulically connected to the master brake cylinder (10) via a second feed line (88) leading to the high-pressure switching valve (90), and wherein the switch-over valve (96) is also hydraulically connected to the master brake cylinder (10) via a branching point (92) which is formed in the second feed line (88); and
a control device (34) by means of which each of the two wheel inlet valves (54a, 54b) and of the two wheel outlet valves (42a, 42b) of the first brake circuit (26), each of the two wheel inlet valves (54a, 54b) and of the two wheel outlet valves (42a, 42b) of the second brake circuit (28), the switch-over valve (96) and the high-pressure switching valve (90) can be controlled and additionally the first valve (18) and the second valve (30) can be switched in antiphase mode in such a way that by placing the first valve (18) in its opened state and the second valve (30) in its closed state the brake system can be placed in a first mode in which an increase in pressure in the master brake cylinder (10) is prevented during the adjustment of the master-brake-cylinder floating piston partially into the master brake cylinder (10) by the adjustment travel below the limiting adjustment travel, and by placing the first valve (18) in its closed state and the second valve (30) in its opened state the brake system can be placed in a second mode in which an increase in pressure in the master brake cylinder (10) is ensured by means of the adjustment of the master-break-cylinder floating piston partially into the master brake cylinder (10) by the adjustment travel below the limiting adjustment travel,
**characterized in that**
by placing the first valve (18) in its opened state and the second valve (30) in its closed state, an intervention by the master brake cylinder (10) in the two wheel brake cylinders (32a, 32b) of the first brake circuit (26) and an increase in pressure in the two wheel brake cylinders (32a, 32b) of the first brake circuit (26) are prevented despite a pressure increase in the master brake cylinder owing to the closed second valve (30);
by placing the first valve (18) in its closed state and the second valve (30) in its open state an increase in pressure in the master brake cylinder (10) can be passed on via the at least partially opened second valve (30) into the two wheel brake cylinders (32a, 32b) of the first brake circuit (26); and
the brake system has precisely twelve actuable valves (18, 30, 42a, 42b, 54a, 54b, 90, 96, 108a, 108b, 120a, 120b) as the first valve (18), the second valve (30), the two wheel inlet valves (54a, 54b) and the two wheel outlet valves (42a, 42b) of the first brake circuit (26), the two wheel inlet valves (54a, 54b) and the two wheel outlet valves (42a, 42b) of the second brake circuit (28), the switch-over valve (96) and the high-pressure switching valve (90) which can be placed at least in their open state and in their closed state by means of at least one electrical control signal (36) which is made available by the control device (34), wherein the first valve (18) can be switched into its open state, and the second valve (30) can be switched into its closed state, in antiphase mode by a common current signal of the control device (34) as a control signal (36).

2. Brake system according to Claim 1, wherein the first brake circuit (26) comprises a pump (38) by means of which a further braking medium volume can be pumped into the two wheel brake cylinders (32a, 32b) of the first brake circuit (26) from the braking-medium reservoir (12) which is used as a braking-medium storage device (12, 20) or from an additional braking-medium reservoir (12).

3. Brake system according to Claim 2, wherein the brake system comprises an overpressure valve (76) which is arranged between a delivery side of the pump (38) and the braking-medium reservoir (12).

## Revendications

1. Système de freinage pour un véhicule, avec
un maître-cylindre (10) avec un piston flottant de maître-cylindre déplaçable au moins partiellement vers l'intérieur du maître-cylindre (10);
un dispositif d'accumulation de liquide de frein (12, 20), dans lequel un volume d'accumulation prédéterminé d'un liquide de frein peut être transféré, dans lequel le dispositif d'accumulation de liquide de frein (12, 20) est un réservoir de liquide de frein (12) ou une chambre d'accumulation à basse pression (20);
une première vanne fermée sans courant (18), qui est hydrauliquement raccordée au maître-cylindre (10) par une première conduite d'alimentation (44) et par laquelle le dispositif d'accumulation de liquide de frein (12, 20) est hydrauliquement raccordé au maître-cylindre (10), de telle manière que, lors d'un déplacement du piston flottant de maître-cylindre en partie dans le maître-cylindre (10) d'une course inférieure à une course limite correspondant au volume d'accumulation, un volume de liquide de frein inférieur au volume d'accumulation prédéterminé puisse être transféré du maître-cylindre (10) au dispositif d'accumulation de liquide de frein (12, 20) par ladite première vanne au moins partiellement ouverte (18);
un premier circuit de freinage (26) avec deux cylindres de frein de roue (32a, 32b) et chaque fois une vanne d'entrée de roue (54a, 54b) et chaque fois une vanne de sortie de roue (42a, 42b) par cylindre de frein de roue (32a, 32b), dans lequel chacune des deux vannes d'entrée de roue (54a, 54b) et des deux vannes de sortie de roue (42a, 42b) du premier circuit de freinage (26) présente deux raccords et est chaque fois une vanne réglable en continu;
une deuxième vanne ouverte sans courant (30), qui est hydrauliquement raccordée au maître-cylindre (10) par un point de branchement (48) dans la première conduite d'alimentation (44) et par laquelle le premier circuit de freinage (26) est hydrauliquement raccordé au maître-cylindre (10), de telle manière qu'une augmentation de pression dans les deux cylindres de frein de roue (32a, 32b) du premier circuit de freinage (26) lors de l'augmentation de pression dans le maître-cylindre (10) puisse être empêchée par la deuxième vanne fermée (30), et qu'une augmentation de pression dans les deux cylindres de frein de roue (32a, 32b) du premier circuit de freinage (26) lors de l'augmentation de pression dans le maître-cylindre (10) puisse être transférée par la deuxième vanne au moins partiellement ouverte (30);
un deuxième circuit de freinage (28) avec deux cylindres de frein de roue (86a, 86b), une vanne d'inversion (96), une vanne de commande haute pression (90), et chaque fois une vanne d'entrée de roue (108a, 108b) et chaque fois une vanne de sortie de roue (120a, 120b) par cylindre de frein de roue (86a, 86b), dans lequel chacune des deux vannes d'entrée de roue (54a, 54b) du deuxième circuit de freinage (28) présente deux raccords et est chaque fois une vanne réglable en continu et chacune des deux vannes de sortie de roue (42a, 42b) du deuxième circuit de freinage (28) présente deux raccords et est chaque fois une vanne de commande, dans lequel le deuxième circuit de freinage (28) est hydrauliquement raccordé au maître-cylindre (10) par une deuxième conduite d'alimentation (88) conduisant à la vanne de commande haute pression (90), et dans lequel la vanne d'inversion (96) est également raccordée hydrauliquement au maître-cylindre (10) par un point de branchement (92) formé dans la deuxième conduite d'alimentation (88); et
un dispositif de commande (34), au moyen duquel chacune des deux vannes d'entrée de roue (54a, 54b) et des deux vannes de sortie de roue (42a, 42b) du premier circuit de freinage (26), chacune des deux vannes d'entrée de roue (54a, 54b) et des deux vannes de sortie de roue (42a, 42b) du deuxième circuit de freinage (28), la vanne d'inversion (96) et la vanne de commande haute pression (90) peuvent être commandées et en outre la première vanne (18) et la deuxième vanne (30) peuvent être commutées en opposition de phase, de telle manière que, par une commande de la première vanne (18) dans son état ouvert et de la deuxième vanne (30) dans son état fermé, le système de freinage puisse être commandé dans un premier mode, dans lequel une augmentation de pression dans le maître-cylindre (10) lors du déplacement du piston flottant de maître-cylindre en partie dans le maître-cylindre (10) de la course inférieure à la course limite est empêchée, et que, par une commande de la première vanne (18) dans son état fermé et de la deuxième vanne (30) dans son état ouvert, le système de freinage puisse être commandé dans un deuxième mode, dans lequel une augmentation de pression dans le maître-cylindre (10) au moyen du déplacement du piston flottant de maître-cylindre en partie dans le maître-cylindre (10) de la course inférieure à la course limite est garantie, **caractérisé en ce que**
par la commande de la première vanne (18) dans son état ouvert et de la deuxième vanne (30) dans son état fermé, une interaction du maître-cylindre (10) dans les deux cylindres de frein de roue (32a, 32b) du premier circuit de freinage (26) et une augmentation de pression dans les deux cylindres de frein de roue (32a, 32b) du premier circuit de freinage (26) sont empêchées malgré une augmentation de pression dans le maître-cylindre à cause de la deuxième vanne fermée (30);
par la commande de la première vanne (18) dans son état fermé et de la deuxième vanne (30) dans son état ouvert, une augmentation de pression dans le maître-cylindre (10) peut être retransmise dans les deux cylindres de frein de roue (32a, 32b) du premier circuit de freinage (26) par la deuxième vanne (30) au moins partiellement ouverte; et
le système de freinage présente exactement douze vannes pouvant être commandées (18, 30, 42a, 42b, 54a, 54b, 90, 96, 108a, 108b, 120a, 120b) comme la première vanne (18), la deuxième vanne (30), les deux vannes d'entrée de roue (54a, 54b) et les deux vannes de sortie de roue (42a, 42b) du premier circuit de freinage (26), les deux vannes d'entrée de roue (54a, 54b) et les deux vannes de sortie de roue (42a, 42b) du deuxième circuit de freinage (28), la vanne d'inversion (96) et la vanne de commande haute pression (90), qui peuvent être commandées au moins dans leur état ouvert et dans leur état fermé au moyen d'au moins un signal de commande électrique (36) généré par le dispositif de commande (34), dans lequel la première vanne (18) et la deuxième vanne (30) peuvent être commandées en opposition de phase respectivement dans son état ouvert et dans son état fermé par un signal de courant commun du dispositif de commande (34) en tant que signal de commande (36).

2. Système de freinage selon la revendication 1, dans lequel le premier circuit de freinage (26) comprend une pompe (38), au moyen de laquelle un autre volume de liquide de frein peut être pompé dans les deux cylindres de frein de roue (32a, 32b) du premier circuit de freinage (26) à partir du réservoir de liquide de frein utilisé comme dispositif d'accumulation de liquide de frein (12, 20) ou d'un réservoir de liquide de frein supplémentaire (12).

3. Système de freinage selon la revendication 2, dans lequel le système de freinage comprend une soupape de sûreté (76) disposée entre un côté de pression de la pompe (38) et le réservoir de liquide de frein (12).
